# EUROPÄISCHE PATENTSCHRIFT

(11) **EP 3 023 468 B1**
(45) Veröffentlichungstag und Bekanntmachung des Hinweises auf die Patenterteilung: **18.05.2022**
(21) Anmeldenummer: 15002875.1
(22) Anmeldetag: 08.10.2015
(51) Int. Cl.: C09J 7/00, C09J 11/04, C09J 11/06, B32B 7/12

(54) **KLEBERSYSTEM ZUR VERWENDUNG BEI EINER BAUVERBUNDFOLIE UND BAUVERBUNDFOLIE MIT EINEM KLEBERSYSTEM**
ADHESIVE SYSTEM FOR USE IN A CONSTRUCTION COMPOSITE FILM AND CONSTRUCTION COMPOSITE FILM WITH AN ADHESIVE SYSTEM
SYSTEME DE COLLE DESTINE A ETRE UTILISE DANS UNE NAPPE SYNTHETIQUE POUR LE BATIMENT ET NAPPE SYNTHETIQUE POUR LE BATIMENT DOTEE D'UN SYSTEME DE COLLE

(30) Priorität: 18.11.2014 DE 102014016972
(43) Veröffentlichungstag der Anmeldung: 25.05.2016
(73) Patentinhaber: Ewald Dörken AG, 58313 Herdecke (DE)
(72) Erfinder: Schröer, Jörn, 58313 Herdecke (DE); Lipps, Jochen, 58089 Hagen (DE)
(74) Vertreter: Von Rohr Patentanwälte Partnerschaft mbB

(56) Entgegenhaltungen:
- WO-A1-94/22669
- US-A- 4 058 643
- US-A- 5 160 788
- DATABASE WPI Week 199008 Thomson Scientific, London, GB; AN 1990-054971 XP002756588, & JP H02 8278 A (MITSUBISHI PLASTICS IND LTD) 11. Januar 1990 (1990-01-11)
- None

## Beschreibung

Die Erfindung betrifft die Verwendung eines Klebersystems gemäss Anspruch 1 zur Verklebung von Bauverbundfolien.

Der Begriff "Bauverbundfolie" steht vorliegend als Oberbegriff stellvertretend insbesondere für Unterdeckbahnen, Unterspannbahnen, Fassadenbahnen, Dampfbremsen, sowie Dampfsperren, während das Klebesystem insbesondere die Verwendung von separaten einseitigen oder doppelseitigen Klebebändern, separaten Kartuschenklebern, Dichtschnüren, Flüssigbeschichtungen, trocknende/aushärtende Flüssigkleber, Hotmelts oder einer Nahtverklebung beschreibt.

Bauverbundfolien der vorgenannten Art werden in Form von Unterdeckbahnen bzw. Unterspannbahnen im Bauaußenbereich eingesetzt und haben vor allem die Aufgabe, die Dachkonstruktion vor Regen, Feuchtigkeit, Flugschnee und Staub zu schützen. Damit im Bau vorhandene Feuchtigkeit, beispielsweise Neubau-Feuchtigkeit oder die Feuchtigkeit aus bewohnten Bereichen des Daches, an die Umgebung abgegeben werden kann, ist es erforderlich, dass solche Unterdachbahnen eine ausreichende Durchlässigkeit für Wasserdampf aufweisen. Derartige Bahnen sind daher in der Regel diffussionsoffen. Gleiches gilt für Fassadenbahnen der vorgenannten Art, mit dem einzigen Unterschied, dass diese die Aufgabe haben, die Fassadenkonstruktion entsprechend zu schützen.

Darüber hinaus existieren Bauverbundfolien der vorgenannten Art, die in Form von Dampfbremsen und Dampfsperren im Bauinnenbereich eingesetzt werden, mit der Aufgabe, die Dachkonstruktion vor Feuchtigkeit aus bewohnten Bereichen des Daches zu schützen.

Um diese Funktionen zu erfüllen, ist es notwendig, die Bauverbundfolie untereinander, aber auch mit aufgehenden Bauteilen, luft- und winddicht, ggf. auch wasserdicht zu verbinden. Bei diesen Verbindungen handelt es sich häufig um Verklebungen bzw. Klebersysteme mit separaten Klebebändern, die auch mit Vliesen oder ähnlichen Materialien verstärkt sein können, separaten Kartuschenklebern,

Flüssigbeschichtungen auf Grundlage von Kunststoffdispersionen, insbesondere auf Basis Acrylat- oder Polyurethanverbindungen, die auch mit Vliesen oder ähnlichen Materialien verstärkt sein können, Bitumen, Bitumen-Polymergemische, Butyl oder um Nahtverklebungen, wobei letztere im Produktionsprozess der Bauverbundfolie durch den Zulauf eines Klebebands, den Auftrag eines Hotmelts, insbesondere eines PSA-Hotmelts, oder durch den Auftrag einer Paste bzw. Dispersion mit anschließender Trocknung, realisiert werden.

Bauverbundfolien, wie sie aus dem Stand der Technik bekannt sind und in der Praxis bisher eingesetzt werden, weisen häufig spezielle Flammhemmersysteme auf, um den Brandschutzanforderungen zu entsprechen. Problematisch ist, dass die bei Bauverbundfolien verwendeten Klebersysteme als solche in der Regel nicht die Anforderungen des Brandschutzes erfüllen. Da die mit dem Klebersystem versehenen Bereiche einer Bauverbundfolie in der Regel nur einen sehr geringen Teil der Bauverbundfolie ausmachen, wird im Hinblick auf die geringe Brandlast dieses Problem in der Regel toleriert.

Aufgabe der vorliegenden Erfindung ist es nun, ein Klebersystem zur Verwendung bei einer Bauverbundfolie und eine Bauverbundfolie insbesondere mit einem derartigen Klebersystem zu schaffen, wobei das Klebersystem und die Bauverbundfolie auch hohen Anforderungen an den Brandschutz entsprechen.

Die vorgenannte Aufgabe ist bei einem Klebersystem der eingangs genannten Art erfindungsgemäß im wesentlichen dadurch gelöst, dass der Kleber als solcher einen Flammhemmer aufweist. Von besonderem Vorteil ist es in diesem Zusammenhang, dass der Kleber einen solchen Flammhemmer und/oder einen Flammhemmer in solcher Menge aufweist, dass der Kleber, und insbesondere eine mit dem Kleber verklebte Bauverbundfolie an der Verklebungsstelle, mindestens der Brandklasse E gemäß EN 13501-1, vorzugsweise der Brandklasse B gemäß EN 13501-1, entspricht.

Wenngleich die Verwendung von Flammhemmern bei Bauverbundfolien als solchen bekannt ist, hat man bisher von einem Einsatz von Flammhemmern in Klebersystemen für Bauverbundfolie im Hinblick auf die notwendigen Festigkeits- und Stabilitätsanforderungen, die an derartige Klebersysteme bei Bauverbundfolien gestellt werden, abgesehen.

Klebemassen reagieren sehr sensibel auf die Anwesenheit von eingebrachten Fremdsubstanzen. Die Auswirkungen derart eingebrachter Fremdmaterialien können vom Verlust der inneren Festigkeit (Kohäsion) bis hin zum vollständigen Verlust der Anfangshaftung (Adhäsion) bei Applikation auf einen Untergrund reichen.

Dieses Phänomen betrifft insbesondere die Stoffklasse der Flammhemmer, die nach dem Stand der Technik den damit auszurüstenden Materialen in der Regel fein verteilt in fester Form oder fein verteilt in flüssiger Form der Gesamtmasse zugegeben werden und in Klebemassen, insbesondere bei sofortklebenden System, daher zu den genannten Problemen führen.

Ein weiteres Problem betrifft die Reaktivität einiger Flammhemmer (als Beispiel seien exemplarisch Phosphorverbindungen genannt), die sich insbesondere im Produktionsprozess wässriger Acrylat- und PU-Dispersionen (aus denen durch Beschichtung eines Trägerfilms mit anschließender Trocknung zumeist sofortklebende Klebebänder hergestellt werden) als unverträglich zeigen und die daher trotz ihrer hohen flammhemmenden Wirkung üblicherweise nicht eingesetzt werden.

Einige Flammhemmer neigen darüber hinaus zu Migration, und auch wenn sie während des Produktionsprozesses der Klebemasse in homogener Verteilung enthalten sind, zieht es sie durch Wanderungsprozesse innerhalb der Klebemasse an ihre Oberfläche. Damit verringern sie bei sofortklebenden Systemen die Anfangshaftung bzw. sie verdrängen bei bereits verklebten System die Klebemasse von der Kontaktfläche zum verklebten Untergrund, was zu einer sich stetig verringernden Güte einer Verbindung führt.

Erfindungsgemäß ist nun überraschenderweise festgestellt worden, dass sich die zuvor dargestellte Problematik im Zusammenhang mit Flammhemmern für Klebesysteme für Bauverbundfolien zumindest ganz überwiegend vermeiden und sich trotz des dem Kleber zugegebenen Flammhemmeranteils eine hinreichende mechanische Stabilität einer Verbindung mit einer Klebeschicht eines erfindungsgemäßen Klebersystems erreichen lässt. Erfindungsgemäß ist festgestellt worden, dass auch bei Einsatz eines Flammhemmers eine solche mechanische Stabilität der Klebverbindung erzielbar und auch für den notwendigen Einsatzzweck ausreichend ist, wenn bei einer Klebverbindung eine solche mechanische Stabilität vorgesehen ist, dass bei einer T-Schälprüfung bei einer konstanten Prüfgeschwindigkeit von 100 mm pro Minute die erreichten Mittelwerte wenigstens 2,5 N/cm bzw. die erreichten Maximalwerte mindestens 6,5 N/cm betragen und bei einer konstanten Prüfgeschwindigkeit von 10 mm/min die erreichten Mittelwerte mindestens 1,5 N/cm bzw. die erreichten Maximalwerte mindestens 2,5 N/cm betragen.

Insbesondere lässt sich eine hinreichende Stabilität einer Klebverbindung mit einem erfindungsgemäßen Klebersystem durch die nachfolgend angegebenen Alternativen, die für sich oder aber auch in Kombination miteinander möglich sind, verwirklichen.

### 1) Verwendung großer Flammhemmerpartikel

Um bei der Einarbeitung eines Flammhemmers in die Klebemasse die klebenden Eigenschaften nicht zu beeinflussen, hat es sich als zweckmäßig gezeigt, die Kontaktfläche des Flammhemmers zur Klebemasse bzw. zum Kleber zu minimieren, also die Partikelgröße des einzuarbeitenden Flammhemmers zu vergrößern, so dass dieser bei gleichbleibender Zugabemenge zur Gesamtrezeptur, punktuell in konzentrierter Form enthalten ist:
Typische Korngrößen der Flammhemmer bei klassischer, dem Stand der Technik entsprechenden, Verarbeitung liegen - mit Ausnahme von Blähgraphit - zwischen 4 µm und 40 µm. Blähgraphit hat einen durchschnittlichen Partikeldurchmesser von kleiner 200 µm. Für die erfindungsgemäße Verwendung der Flammhemmer in Klebemassen sind die Partikelgrößen vorzugsweise zu verdoppeln, bevorzugt zu vervierfachen und besonders bevorzugt zu verzehnfachen. Die Grenzen der Vergrößerung werden hierbei durch die effektive Schichtdicke der jeweils zu erreichenden Kleberzone gesetzt.

Bei Verwendung von Decabromdiphenylethan, Antimontrioxid, Phosphinat, Blähgraphit und Brompolymeren sollten erfindungsgemäß folgende durchschnittliche Partikeldurchmesser vorgesehen sein:
- Decabromdiphenylethan größer 10 µm, vorzugsweise größer 20 µm und insbesondere größer 50 µm und/oder
- Antimontrioxid größer 8 µm, vorzugsweise größer 16 µm und insbesondere größer 40 µm und/oder
- Phosphinat größer 80 µm, vorzugsweise größer 160 µm und insbesondere größer 400 µm und/oder
- Blähgraphit größer 400 µm, vorzugsweise größer 800 µm und insbesondere größer 2000 µm und/oder
- Brompolymere größer 10 µm, vorzugsweise größer 20 µm und insbesondere größer 50 µm.

### 2) Verkapselung reaktiver Flammhemmer

Um die guten flammhemmenden Eigenschaften derjenigen Flammhemmer zu nutzen, die sich im Produktionsprozess wässriger Acrylat- und PU-Dispersionen als zu reaktiv und nicht für die Verwendung geeignet angesehen worden sind, werden diese mit einer Mikroverkapselung versehen, bestehend z. B. aus Melaminharzen. Die auf diese Weise mit einer Schutzhülle versehenen Flammhemmer können dann wie ein herkömmlicher mineralischer Flammhemmer verarbeitet werden.

### 3) Verwendung von Klebstoffharzen mit einpolymerisierten Flammhemmern

Viele Klebersysteme bestehen aus Klebstoffharzen auf Basis organischer Polymere. Diese Klebersysteme können bereits beim Polymerisationsprozess dadurch flammhemmend ausgerüstet werden, dass flammgehemmte Mono- bzw. Oligomere bei der Polymerisationsreaktion eingesetzt werden.

Halogenierte Olefine (z.B. Vinylchlorid, 1,2-Dibromethen) können z. B. bei Acrylaten, Butylen oder Hotmelts in die Hauptkette einpolymerisiert werden und entsprechend funktionalisierte Alkohole können mit den Säuregruppen z. B. bei Acrylaten verestert werden. Ebenso können bei der Darstellung von Polyurethan funktionalisierte Diole in die Kettenreaktion mit Diisocyanaten eingesetzt werden.

### Beispiel: Acrylat

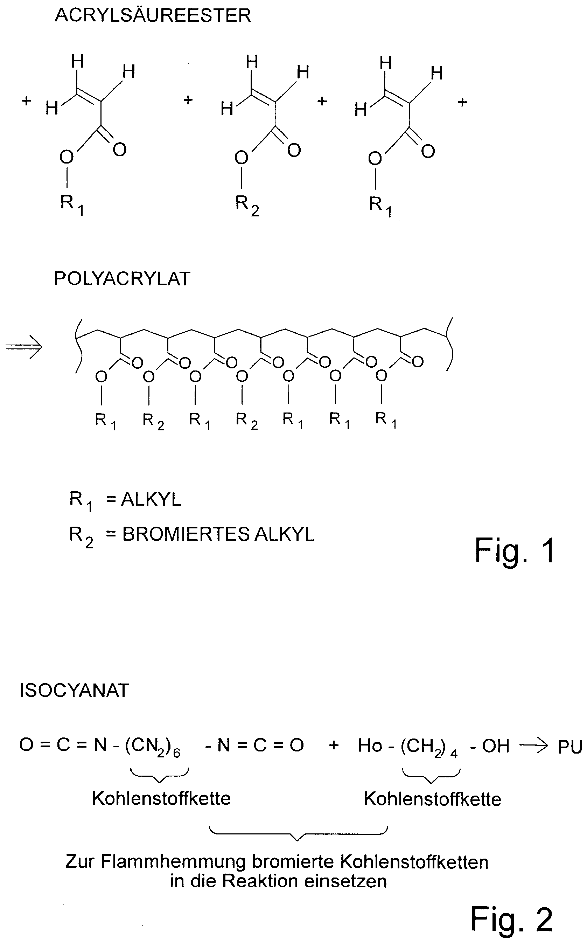

Zur Darstellung von Polyacrylat werden Acrylsäureester radikalisch polymerisiert. Ersetzt man einen Teil der Acrylsäureester durch z. B. bromierte Acrylsäureester, erhält man Polyacrylat mit statistisch verteilten bromierten Alkylresten, wie dies in Fig. 1 dargestellt ist.

### Beispiel: Polyurethan

Polyurethane werden durch eine Polyadditionsreaktion von Polyisocyanaten mit mehrwertigen Alkoholen (Polyolen) dargestellt. Die Reaktanden verfügen hierbei über Kohlenstoffketten, in denen Wasserstoffatome gegen flammhemmend wirksame Bromatome ausgetauscht werden können, wie dies in Fig. 2 dargestellt ist.

Ergibt eine herkömmliche Polymerisationskettenreaktion aus Polyol (A) und Isocyanat (B) ein Polyurethan den Aufbau: ...-A-B-A-B-A-B-A-B-..., würde man bei einer Polymerisationskettenreaktion aus Polyol (A), Isocyanat (B), bromiertes Polyol (A') bzw. bromiertes Isocyanate (B') ein Polyurethan z. B. folgenden Aufbaus erhalten, je nach prozentualer Zugabemenge der einzelnen Edukte: ...-A-B-A-B-A'-B-A-B-A-B-A'-B-A-B-A'-B-...

### 4) Austausch/Ersatz mineralischer Füllstoffe durch flammhemmend wirkende Füllstoffe

Flüssige Klebersysteme, die keinen Flammhemmer enthalten, weisen oft bis zu 50 % mineralische Füllstoffe auf, um die bei der Verarbeitung notwendigen Schichtdicken zu erreichen, z. B. Kreide, Quarz oder Schwerspat. Bei diesen bekannten Systemen wird nun ein Teil der flammhemmend nicht aktiven Füllstoffe durch flammhemmend aktive Füllstoffe ersetzt, z. B. durch Phosphorverbindungen oder auch Halogen-Antimontrioxid-Kombinationen. In Abhängigkeit des für den Einsatzfall notwendigen Klebersystems und der zu erreichenden Brandklasse werden hierbei min. 5 % der mineralischen Füllstoffe durch flammhemmende Füllstoffe ersetzt, bevorzugt min. 10 %, besonders bevorzugt aber min. 15 %.

### 5) Bi-Komponenten System: flammgehemmter Kern, selbstklebender Mantel

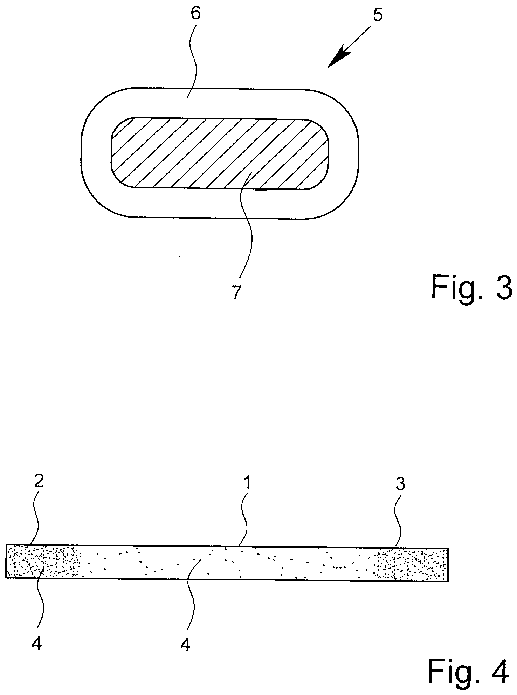

Dichtschnüre werden in der Praxis als Alternative zu Kartuschenklebern eingesetzt. Es handelt sich hierbei um Materialen, die eine zu den bei Verwendung von Kartuschenklebern erhaltenen Kleberaupen vergleichbare Dicke aufweisen. Bei Dichtschnüren ist für die Verklebung in der Praxis lediglich die Oberfläche relevant. Um diese Dichtschnüre flammhemmend auszurüsten, wird nun also lediglich der Mantel (die Oberfläche) klebend ausgeführt, der Kern hingegen besteht aus einem entsprechend flammgehemmten Kunststoff oder eines anderen Flammhemmers, wie dies in Fig. 3 dargestellt ist. Die im Querschnitt dargestellte Dichtschnüre 5 weist einen klebenden Mantel 6 und einen Kern 7 auf, der durch einen Flammhemmer gebildet ist.

Betrachtet man die oben genannte Aufstellung der Ausführungsmöglichkeiten einer Verklebung bzw. eines erfindungsgemäßen Klebsystems ist erkennbar, dass nicht jede der Alternativen auch für jede Produktklasse geeignet ist. Im Hinblick auf die unterschiedlichen Anforderungen beim Einsatz, die unterschiedlichen Wirkprinzipien der einzelnen Alternativen, des Produktaufbaus und der Fertigungsmethode des Produktes ist die jeweilige Alternative oder auch Kombinationen von Alternativen entsprechend auszuwählen.

Darüber hinaus existiert eine weitere Alternative, bei der jedoch der Flammhemmer nicht Teil des Klebersystems ist bzw. dem Klebstoff zugegeben wird, sondern einem Träger, auf den der Klebstoff bzw. das Klebersystem anschließend aufgebracht wird. Hierbei handelt es sich um eine eigenständige Alternative, die auch ohne das zuvor beschriebene, Flammhemmer aufweisende Klebersystem, aber durchaus auch in Kombination damit eingesetzt werden kann:

### 6) Flammhemmende Ausstattung des Trägers und/oder des Geleges

Diese Ausgestaltung kommt insbesondere in Betracht, wenn ein - bedarfsweise auch ohne Flammhemmer versehener - Kleber auf einen Trägerfilm aufgebracht wird. Dies ist beispielsweise bei Klebebändern oder aber bei Bauverbundfolien selbst der Fall. So kann bei Klebebändern der zugehörige Trägerfilm selbst mit der in Abhängigkeit des jeweils verwendeten Materials maximal möglichen Flammhemmermenge ausgerüstet sein. Ist das betreffende Klebersystem darüberhinaus mit einem Verstärkungsgelege ausgestattet, kann alternativ oder ergänzend zu dem Trägerfilm auch dieses entsprechend flammgehemmt ausgerüstet sein. Dabei versteht es sich, dass der Flammhemmer über die gesamte Breite des Trägers bei einem Klebeband vorgesehen sein sollte.

Wird die vorliegende Alternative bei Bauverbundfolien unmittelbar angewendet, kann vorgesehen sein, dass die Bauverbundfolie an wenigstens einem Randbereich einen Flammhemmerbereich aufweisen. Bei einem Flammhemmerbereich handelt es sich um einen solchen Bereich, der eine höhere Menge an Flammhemmer aufweist als andere Bereichen der Bauverbundfolie. Die Bauverbundfolie weist beispielsweise dann im mittigen Bereich - bezogen auf die Breite - nur eine geringe Menge an Flammhemmer auf, während ein demgegenüber erhöhter Mengenbereich im Randbereich vorgesehen ist.

Grundsätzlich ist es auf verschiedene Art und Weise möglich, den Flammhemmbereich zu realisieren. Eine Ausführungsform ist in Fig. 4 dargestellt, wo eine Bauverbundfolie 1 gezeigt ist, die in ihren beiden Randbereichen 2, 3 einen erhöhten Anteil bzw. eine größere Menge an Flammhemmer 4 aufweist, während im mittigen Bereich, der zwischen den beiden Randbereichen 2, 3 liegt, der Anteil an Flammhemmer demgegenüber verringert ist. Der Anteil an Flammhemmer im Flammhemmerbereich lässt sich dabei bereits während der Extrusion der Bauverbundfolie realisieren.

Darüberhinaus sind alternativ weitere Ausführungsformen bei einer Bauverbundfolie mit Flammhemmerbereich möglich. Bei einer einschichtigen Bahn kann beispielsweise an zumindest einem Randbereich oder an beiden gegenüberliegenden Randbereichen ein Flammhemmerbereich durch einen zugelaufenen separaten Flammhemmerstreifen vorgesehen sein. Ein derartiger Streifen kann an einem oder an beiden Längsseiten vorder- und/oder rückseitig vorgesehen sein. Die Flammhemmerbereiche können dabei als durchgehende breite Streifen ausgebildet sein oder aber auch in jedem Bereich mehrere schmalere Streifen aufweisen. Weist die Bauverbundfolie einen wenigstens zweischichtigen Aufbau auf, ist es möglich, dass eine Schicht randseitig übersteht, während die andere Schicht randseitig verkürzt ist. Der verkürzte Bereich wird dann mit dem Flammhemmerbereich aufgefüllt. Auch hierbei kann ein entsprechender Randstreifen bei der Herstellung der Bahn zulaufen. Eine solche Ausgestaltung bietet sich insbesondere bei einem wenigstens dreischichtigen Aufbau einer Bauverbundfolie an, wobei die Breite der mittleren Bahn gegenüber der Breite der beiden äußeren Bahnen verringert ist und sich in dem verkürzten Bereich der Flammhemmerbereich befindet.

Nachfolgend werden die unterschiedlichen erfindungsgemäßen Klebersysteme, die für die in der Praxis üblichen Verklebungsmethoden eingesetzt werden, genannt.
1) Flüssige Systeme, die einen Verbund erst nach Trocknung aufbauen (nicht zwangsläufig dauerklebrig):
   a. Flüssigbeschichtungen (optional mit Armierungseinlage)
      i. Acrylatsysteme
      ii. Polyurethansysteme
   b. Kartuschenkleber
      i. Acrylatsysteme
      ii. MS-Polymere (Methacryl-Styrol)
      iii. Polyurethansysteme
      iv. Siliconsysteme
   c. Trocknende/aushärtende Flüssigkleber

Da im Gegensatz zu Klebebändern keine Anfangsklebrigkeit von Nöten ist, wird hierbei bevorzugt nach Methode 4 verfahren. Welche Art von Flammhemmersystem zum Einsatz kommt, ist hierbei insbesondere von der Verträglich der Flammhemmer im flüssigen System selbst abhängig. Sollen mit dem flüssigen System unverträgliche Flammhemmer zum Einsatz kommen, werden diese hierbei vor Einarbeitung nach Methode 2 verkapselt.
2) Sofortklebende Systeme (dauerklebrig)
a. Klebebänder, einseitig (mit Träger und optional Verstärkung) oder doppelseitig (optional mit Verstärkung)
   i. Acrylatsysteme (Dispersionsacrylat, Lösemittelacrylat, 100% Systeme vernetzend)
   ii. Butylkleber mit Träger und optionalem Gelege
   iii. Bitumenklebebänder mit Träger
   iv. Hotmelt (Polyamid, Polyolefin (z. B. EVA, APAO amorphe Polyalphaolefine), Acrylat, Polyurethan), ggf. UV- oder Isocyanat-vernetzt

Bei Klebebändern werden Flammhemmer in die Klebemasse selbst insbesondere nach Methode 1 eingearbeitet, um die Kontaktfläche des Flammhemmers zur Klebemasse selbst, besonders im Bereich der bei der Verklebung aktiven Oberfläche, zu minimieren. Zur Verstärkung der flammhemmenden Eigenschaften, können dazu sowohl der Träger, als auch ein etwaig vorhandenes Gelege nach Methode 6 kombiniert werden.

Besteht die Klebemasse aber aus einem synthetisch hergestellten Polymer (i, ii, iv), wird dieses bevorzugt nach Methode 3 flammgehemmt ausgestattet, um die Einarbeitung von zur Flammhemmung notwendiger Fremdsubstanzen zu vermeiden.
b. Selbstkleberänder
i. Hotmelt (Polyamid, Polyolefin (z. B. EVA, APAO amorphe Polyalphaolefine), Acrylat, Polyurethan), ggf. UV- oder Isocyanat-vernetzt
ii. Zulaufende Acrylatklebebänder (Dispersionsacrylat, Lösemittelacrylat, 100% Systeme vernetzend)
iii. Butylkleber
iv. Bitumenkleber

Bei Selbstkleberändern kommt kein Trägerfilm und kein Gelege zum Einsatz. Hier verbleibt also gleich bei den Klebebändern (2a) nur Methode 1 zur flammhemmenden Ausstattung. Besteht die Klebemasse aber aus einem synthetisch hergestellten Polymer (i, ii, iii), wird dieses bevorzugt nach Methode 3 flammgehemmt ausgestattet, um die Einarbeitung von zur Flammhemmung notwendiger Fremdsubstanzen zu vermeiden.
c) Dichtschnüre
i. Acrylatsysteme
ii. MS-Polymere (modifizierte Silane)
iii. Polyurethansysteme
iv. Siliconsysteme

Auch hier kann der Flammhemmer nach Methode 1 eingearbeitet werden. Da Methode 5 speziell für die Flammhemmung von Dichtschnüren entwickelt wurde, wird diese aber bevorzugt eingesetzt.
d) Heiß applizierte Hotmelts
i. Polyamid, Polyolefin (z. B. EVA, APAO amorphe Polyalphaolefine), Acrylat, Polyurethan, ggf. UV- oder Isocyanat-vernetzt

Bei heiß applizierten Hotmelts kommt kein Trägerfilm und kein Gelege zum Einsatz. Hier verbleibt also gleich bei den Klebebändern (2a) nur Methode 1 zur flammhemmenden Ausstattung. Besteht die Klebemasse aber aus bereits bei der Polymerisation mit flammgehemmten Mono- bzw. Oligomeren ausstattbaren Polymeren (z. B. Acrylat oder Polyurethan), werden diese bevorzugt nach Methode 3 flammgehemmt ausgestattet, um die Einarbeitung von zur Flammhemmung notwendiger Fremdsubstanzen zu vermeiden.

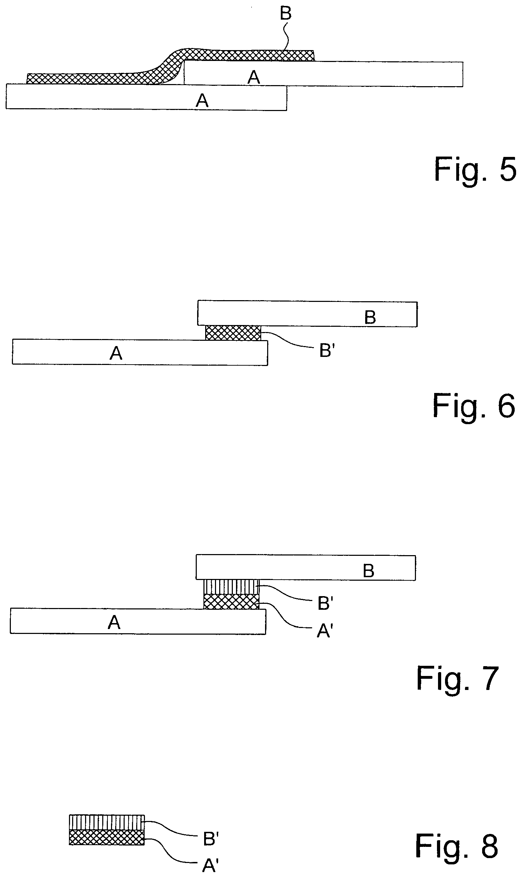

Zur Herstellung einer eine Gebäudekonstruktion schützenden Dichtschicht werden mindestens zwei Bauverbundfolien über eine Klebeschicht miteinander verbunden. Es versteht sich, dass sich dazu die einzelnen Bahnen im Randbereich überlappen. Wird der Überlappungsbereich der Bauverbundfolien mit einem Klebeband oder mit einer Flüssigbeschichtung verbunden, wie dies in Fig. 5 dargestellt ist, ist die bevorzugte Breite dieser Verbindung B bei einem Klebeband wenigstens 60 mm und bei einer Beschichtungsmasse wenigstens 100 mm, vorzugsweise wenigstens 125 mm, besonders bevorzugt wenigstens 150 mm, zu vorzugsweise weitgehend gleichen Teilen auf jeder der beiden überlappenden Bauverbundfolien A. Aufgrund der zum Teil strukturierten Oberflächen der Bauverbundfolien ist bei Klebebändern das Beschichtungsgewicht der Klebemasse wenigstens 100 g/m², vorzugsweise 180 g/m², besonders bevorzugt wenigstens 240 g/m² und weiter mindestens 300 g/m². Bei einer Flüssigbeschichtung ist das erreichte Auftragsgewicht wenigstens 800 g/m², vorzugsweise 1000 g/m², besonders bevorzugt wenigstens 1200 g/m².

Da die in Fig. 5 dargestellte Form der Verbindung die Gefahr birgt, dass diese von herabrinnendem Wasser hinterlaufen wird, kann der Überlappungsbereich der Bauverbundfolien auch mit integrierten Selbstkleberändern B' erfolgen, die auf dem unteren Randbereich der obenliegenden Folie B oder die auf dem oberen Randbereich der untenliegenden Folie angebracht sind und die mit der aufliegenden Folie A verbunden werden, wie dies in Fig. 6 dargestellt ist. Diese Form der Verbindung kann auch mit einem doppelseitigen separaten Klebeband, einem heiß applizierten Hotmelt oder einem trocknenden/aushärtenden Flüssigkleber erreicht werden, die in den Überlappungsbereich eingebracht werden. Die Klebergrammaturen gelten analog zur Ausführungsform gemäß Fig. 5.

In einer alternativen Ausführungsform befinden sich auf beiden zu verbindenden Bahnen im Bereich der Überlappungszone Kleberänder, die dann Kleber in Kleber verklebt werden, wie dies in Fig. 7 dargestellt ist. Analog zur Ausführungsform gemäß Fig. 2 kann diese Verbindung auch erfolgen, indem einer oder beide Selbstkleberänder durch ein separates doppelseitiges Klebeband oder einen heißapplizierten Hotmelt ersetzt werden:
Wird der Überlappungsbereich der Bauverbundfolien, wie in Fig. 7 gezeigt, mit einem oben- und untenliegenden Selbstkleberand verbunden, ist bevorzugt mindestens eine der beiden Klebeschichten vollflächig ausgeführt. Die zweite Klebeschicht kann entweder ebenfalls vollflächig ausgeführt sein, wie dies in Fig. 8 dargestellt ist, oder aber aus nahe beieinanderliegenden Streifen gleicher oder unterschiedlicher Breite bestehen, wie dies in Fig. 9 dargestellt ist, oder aus einer Kombination aus vollflächigem Auftrag und Streifen.

Bei einem vollflächigen Kleberauftrag ist die Breite der aufgebrachten Klebemasse wenigstens 30 mm, vorzugsweise wenigstens 40 mm, besonders bevorzugt wenigstens 50 mm. Bei einem streifenförmigen Auftrag ist die Gesamtbreite der aufgebrachten Klebemasse, bezogen auf die beiden außenliegenden Streifen, wenigstens 40 mm, vorzugsweise wenigstens 60 mm, besonders bevorzugt wenigstens 80 mm und weiter 100mm. Die Abstände zwischen den einzelnen Streifen sind hierbei variabel, bevorzugt höchstens so breit wie die Streifen selbst, vorzugsweise 75 %, besonders bevorzugt aber maximal 50 %.

Aufgrund der zum Teil strukturierten Oberflächen der Bauverbundfolien liegt das aufgebrachte Beschichtungsgewicht der Klebemasse bei mindestens 20 g/m², bevorzugt bei wenigstens 50 g/m², weiter bei wenigstens 100 g/m², bzw. bei wenigstens 150 g/m².

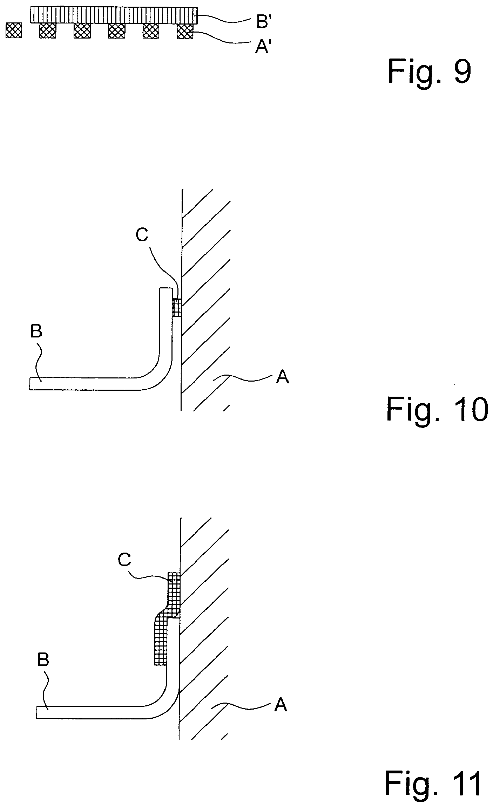

Wird eine Bauverbundfolie mit einem Bauteil verbunden, wie dies in Fig. 10 dargestellt ist, kann diese Verbindung mit einem Kartuschenkleber, einem Heißkleber, einer Dichtschnur oder einem doppelseitigen Klebeband erfolgen, indem an das aufgehende Bauteil A ein Verbindung C von wenigstens 4mm, bevorzugt wenigstens 8 mm Dicke appliziert wird, mit dem die Bauverbundfolie B dann verbunden wird.

Wird eine Bauverbundfolie mit einem Bauteil entsprechend Fig. 11 verbunden, kann diese Verbindung auch mit einer Flüssigbeschichtung C oder einem Klebeband erfolgen, so dass das Bauteil A und die Bauverbundfolie B verbunden wird. Die Breite der aufgebrachten Beschichtungsmasse oder des Klebebands ist hierbei wenigstens 100 mm, vorzugsweise wenigstens 125 mm, besonders bevorzugt wenigstens 150 mm, das bei einer Flüssigbeschichtung erreichte Auftragsgewicht ist hierbei wenigstens 800 g/m², vorzugsweise 1000 g/m², besonders bevorzugt aber wenigstens 1200 g/m².

In jedem Falle ist das erfindungsgemäße Klebersystem derart ausgebildet, dass sich eine hinreichende mechanische Stabilität ergibt. Diese ist dann gewährleistet, wenn bei einer in Anlehnung an die DIN 11339 ("Klebstoffe: T-Schälprüfung für geklebte Verbindungen aus flexiblen Fügeteilen") durchgeführten T-Schälprüfung bei einer konstanten Prüfgeschwindigkeit von 100 mm/min die erreichten Mittelwerte mindestens 2,5 N/cm bzw. die erreichten Maximalwerte mindestens 6,5 N/cm betragen und bei einer konstanten Prüfgeschwindigkeit von 10 mm/min die erreichten Mittelwerte mindestens 1,5 N/cm bzw. die erreichten Maximalwerte mindestens 2,5 N/cm betragen.

Es versteht sich, dass die vorgenannten Ausführungsbeispielen sowohl für Klebersysteme mit Flammhemmern entsprechend den vorgenannten Alternativen 1 bis 5 gelten als auch für Klebersysteme ohne Flammhemmer, bei denen das Klebstoffsystem auf einen Träger mit einem Flammhemmerbereich entsprechend Alternative 6 aufgebracht ist.

Ebenso vielfältig wie die Möglichkeiten zur Ausbildung einer Verklebung sind, zeigen sich die verfügbaren Flammhemmer, die in erfindungsgemäßen Klebersystemen, auch in Kombination miteinander, eingesetzt werden können. Exemplarisch sollen die wichtigsten Flammhemmerklassen genannt werden.

### 1. Antimontrioxid-Halogenkombinationen

Als Reaktionspartner für Antimontrioxid seien insbesondere Chlorparaffine und bromorganischen Verbindungen, wie zum Beispiel Decabromdiphenylethan genannt, wobei Grundsätzlich jedoch jede Halogenverbindung, die bei thermischer Belastung im Brandfall Halogen für die flammhemmenden Kettenreaktionen mit Antimontrioxid abspaltet, denkbar ist.

Diese Kombinationen können bei Verwendung von Antimontrioxid-Suspensionen sowohl in jegliche Art von wässriger Dispersionen eingearbeitet werden, als auch in Form von Masterbatches für die Folienextrusion.

### 2. Halogenierte Flammhemmersysteme

Halogene brauchen nicht zwingend Antimontrioxid als Reaktionspartner, um eine flammhemmende Wirkung zu zeigen. Dieser Effekt wird ausgenutzt, wenn halogenierte Mono- bzw. Oligomere bei der Polymerisation eingesetzt werden. Die erhaltenen flammgehemmten Polymere können je nach Gesamtstruktur bereits selbst als Klebemasse eingesetzt werden, oder können zu flammhemmend auszustattenden System als Flammhemmerkomponente zugegeben werden. Auch halogenierte, nicht polymerisierte organische Verbindungen können als Flammhemmer zugegeben werden. Als Beispiele genannt seien z. B. Decabromdiphenylethan oder auch Chlorparaffine.

### 3. Phosphor und seine Derivate

Phosphor kann in seiner Reinform direkt als roter oder weißer Phosphor zugesetzt werden. Auch Phosphate, Phosphite, Phosphatester und z. B. Ammoniumpolyphosphaten wirken flammhemmend, da diese Verbindungen bei thermischer Belastung im Brandfall mit dem Sauerstoff der Umgebung reagieren und diesen dem Feuer als Reaktionspartner für die Verbrennungsreaktionen entziehen, z. T. auch unter Ausbildung einer nichtbrennbaren Schutzschicht. Auch bei diesen Verbindungen gibt es technische Lösungen, um diese sowohl in flüssigen Systemen zu dispergieren als auch im Extrusionsprozess zu verwenden.

### 4. Blähgraphit

Blähgraphit expandiert bei thermischer Belastung im Brandfall und bildet eine nichtbrennbare Schutzschicht zwischen der Flamme und dem entsprechend ausgestattetem Material. Blähgraphit kann sowohl direkt in wässrigen Systemen dispergiert, als auch in Gestalt von Masterbachtes im Extrusionsprozess verwendet werden.

### 5. Aluminium- bzw. Magnesiumhydroxid

Diese Verbindungen spalten bei thermischer Belastung im Brandfall Wasser ab und entziehen dem Feuer dadurch die Energie für weitere Verbrennungsreaktionen. Auch diese Stoffklasse kann direkt als Pulver in wässrige Dispersionen eingearbeitet oder in Form von Masterbatches bei der Extrusion verwendet werden.

Auf Grund der Menge an in der Praxis bei der Verklebung von BVF Anwendung findender Klebersysteme und der Vielzahl an Möglichkeiten diese aus den unterschiedlichsten Materialien aufzubauen und der Masse an existierender Substanzen bzw. Substanzgemischen zur flammhemmenden Ausrüstung der verwendeten Materialien, sind die Möglichkeiten, ein flammgehemmtes System zur Verklebung der BVF zu realisieren, vielfältig. Nachfolgend werden exemplarisch nur einige bevorzugte Ausführungsbeispiele angegeben:

### 1. Beispiel zu 1-a-i: Flüssigbeschichtungen auf Acrylatbasis

Kunststoffdispersion: "Mowilith LDM 7739" (Basis: Acrylat) der Firma Celanese
Entschäumer: 1 % "AF 0871" der Firma OMG Borchers
Tönpaste: 0,5 % "Printofix Schwarz" der Firma Clariant
Flammhemmersystem: 10 % Decabromdiphenylethan "GREATBAY XZ-8200" der Firma SHANDONG BROTHER INTERNATIONAL TRADING CO., LTD., 5 % Antimontrioxid "ADDIFLAM SL A3" der Firma CTF 2000
Verdicker: 0,8 % "Borchi Gel 0621" der Firma OMG Borchers

### 2. Beispiel zu 2-a-i: Acrylatklebemasse

Klebeacrylat: "Robond PS 8867" der Firma Rohm & Haas
Tackifier: 10 % "Snowtack 875" der Firma Lawter
Flammhemmersystem: 20 % organische Phosphorverbindung "IGNISAL^{®} LP57" der Firma BOZZETTO GMBH
Verdicker: 0,5 % "Acrysol ASE 60" der Firma Rohm & Haas

### 3. Beispiel zu 2-a-i: Trägerfolie

50 % Polyethylen
50 % Flammhemmer Chlorparaffin "Hordaresin CH171" der Firma Dover

### 4. Beispiel zu 2-d-i: Hotmelt

PSA-Hotmelt: "PS 5584" der Firma Novamelt
Flammhemmersystem: 15 % organische Phosphinate "Exolit OP 1311" der Firma Clariant

## Patentansprüche

1. Verwendung eines Klebersystems, aufweisend einen Kleber mit einem Flammhemmer, zur Verklebung von Bauverbundfolien mit einem Untergrund oder zur Verklebung von Bauverbundfolien, in deren Randbereiche die sich überlappen,
**dadurch gekennzeichnet,**
**dass** der Kleber einen Flammhemmer aufweist,
• wobei der Flammhemmer insgesamt oder Partikel des Flammhemmers verkapselt oder ummantelt sind oder
• wobei der Kleber wenigstens ein Kunststoffharz mit einpolymerisiertem Flammhemmer aufweist oder
• wobei der Kleber einen Füllstoffanteil aufweist und wobei wenigstens 5% des Füllstoffanteils durch den Flammhemmer ersetzt sind oder
• wobei der Kleber auf einen Träger aufgebracht ist und wobei der Träger Flammhemmer aufweist,
**dass** der Kleber einen solchen Flammhemmer und/oder einen Flammhemmer in solcher Menge aufweist, dass der Kleber und eine mit dem Kleber verklebte Bauverbundfolie an der Verklebungsstelle mindestens der Brandklasse E gemäß EN 13501-1 entspricht und dass eine Klebverbindung des Klebers eine solche mechanische Stabilität aufweist, dass bei einer T-Schälprüfung nach DIN 11339 bei einer konstanten Prüfgeschwindigkeit von 100 mm/min die Mittelwerte wenigstens 2,5 N/cm und die erreichten Maximalwerte mindestens 6,5 N/cm betragen und dass bei einer konstanten Prüfgeschwindigkeit von 10 mm/min die erreichten Mittelwerte mindestens 1,5 N/cm und die erreichten Maximalwerte mindestens 2,5 N/cm betragen.

2. Verwendung nach Anspruch 1, **dadurch gekennzeichnet, dass** der Kleber und eine mit dem Kleber verklebte Bauverbundfolie an der Verklebungsstelle der Brandklasse B gemäß EN 13501-1 entspricht.

3. Verwendung nach Anspruch 1 oder 2, **dadurch gekennzeichnet, dass** die Verkapselung / Ummantelung aus einem nicht-flammhemmenden Material besteht.

4. Verwendung nach einem der vorhergehenden Ansprüche, **dadurch gekennzeichnet, dass** wenigstens 10% und weiter bevorzugt wenigstens 15% des Füllstoffanteils durch den Flammhemmer ersetzt sind.

5. Verwendung nach einem der vorhergehenden Ansprüche, wobei das Klebersystem randseitig auf einen Randbereich der Bauverbundfolie aufgebracht wird.

6. Verwendung nach Anspruch 5, **dadurch gekennzeichnet, dass** an wenigstens einem Randbereich der Bauverbundfolie ein Flammhemmerbereich mit einem erhöhten Flammhemmeranteil vorgesehen wird.

7. Verwendung nach Anspruch 5 oder 6, **dadurch gekennzeichnet, dass** der Flammhemmerbereich an wenigstens einem Längsrand der Bauverbundfolie und/oder ober- und/oder unterseitig auf die Außenseite der Bauverbundfolie aufgebracht und/oder in den Randbereich der Bauverbundfolie extrudiert ist und/oder zwischen einer oberen und einer unteren Schicht der Bauverbundfolie aufgenommen wird.

8. Verwendung nach einem der vorhergehenden Ansprüche zur Herstellung einer Dichtschicht mit einer Mehrzahl von Bauverbundfolien.

## Claims

1. Use of an adhesive system comprising an adhesive with a flame retardant for bonding composite construction films to a substrate or for bonding composite construction films in the overlapping edge areas,
**characterized in that**
the adhesive has a flame retardant,
• wherein the flame retardant as a whole or particles of the flame retardant are encapsulated or coated, or
• wherein the adhesive comprises at least one plastic resin having a polymerized flame retardant incorporated therein, or
• wherein the adhesive comprises a filler portion and wherein at least 5% of the filler portion is replaced by the flame retardant, or
• wherein the adhesive is applied to a carrier and wherein the carrier comprises flame retardants,
that the adhesive contains such a flame retardant and/or a flame retardant in such an amount that the adhesive and a composite construction films bonded with the adhesive at the bonding point at least comply with fire class E according to EN 13501-1, and
that an adhesive bond of the adhesive has such a mechanical stability that in a T-peel test according to DIN 11339 at a constant test speed of 100 mm/min the average values achieved are at least 2.5 N/cm and the maximum values achieved are at least 6.5 N/cm and that at a constant test speed of 10 mm/min the average values achieved are at least 1.5 N/cm and the maximum values achieved are at least 2.5 N/cm.

2. Use according to claim 1, **characterized in that** the adhesive and a composite construction film bonded with the adhesive at the bonding point comply with fire class B according to EN 13501-1.

3. Use according to claim 1 or 2, **characterized in that** the encapsulation/coating consists of a non-flame-retardant material.

4. Use according to any one of the preceding claims, **characterized in that** at least 10% and more preferably at least 15% of the filler content is replaced by the flame retardant.

5. Use according to any one of the preceding claims, wherein the adhesive system is applied to an edge area of the composite construction film.

6. Use according to claim 5, **characterized in that** a flame retardant region with an increased flame retardant content is provided on at least one edge area of the composite construction film.

7. Use according to claim 5 or 6, **characterized in that** the flame retardant region is applied to at least one longitudinal edge of the composite construction film and/or to the outer side and/or underside of the composite construction film and/or is extruded into the edge area of the composite construction film and/or is accommodated between an upper and a lower layer of the composite construction film.

8. Use according to any one of the preceding claims for producing a sealing layer with a plurality of composite construction films.

## Revendications

1. Utilisation d'un système adhésif, présentant un adhésif avec un retardateur de flamme, pour l'adhérence de films composites de construction avec un sol ou pour l'adhérence de films composites de construction, dans les zones marginales desquelles ils se chevauchent,
**caractérisée en ce que**
l'adhésif présente un retardateur de flamme,
• le retardateur de flamme dans son ensemble ou des particules du retardateur de flamme étant encapsulés ou enrobés, ou
• l'adhésif comprenant au moins une résine plastique avec un retardateur de flamme polymérisé ou
• l'adhésif comprenant une proportion d'une matière de remplissage et dans lequel au moins 5% de la proportion de la matière de remplissage est remplacée par le retardateur de flamme ou
• l'adhésif étant appliqué sur un support et dans lequel le support comprend des retardateurs de flamme,
**en ce que** l'adhésif présente un tel retardateur de flamme et/ou un retardateur de flamme en une quantité telle que l'adhésif et un film composite de construction adhérant avec l'adhésif correspondent au moins à la classe de feu E selon EN 13501-1 au point d'adhésion et
**en ce qu'**un assemblage collé de l'adhésif présente une stabilité mécanique telle que, lors d'un essai de pelage en T selon DIN 11339, à une vitesse d'essai constante de 100 mm/min, les valeurs moyennes obtenues sont d'au moins 2,5 N/cm et les valeurs maximales obtenues sont d'au moins 6,5 N/cm et **en ce que**, à une vitesse d'essai constante de 10 mm/min, les valeurs moyennes obtenues sont d'au moins 1,5 N/cm et les valeurs maximales obtenues sont d'au moins 2,5 N/cm.

2. Utilisation selon la revendication 1, **caractérisée en ce que** l'adhésif et un film composite de construction adhérant avec l'adhésif correspondent à la classe de feu B selon EN 13501-1 au niveau du point d'adhésion.

3. Utilisation selon la revendication 1 ou 2, **caractérisée en ce que** l'encapsulage / l'enrobage est constitué d'un matériau non retardateur de flamme.

4. Utilisation selon l'une des revendications précédentes, **caractérisée en ce qu'**au moins 10% et de préférence au moins 15% de la proportion de la matière de remplissage sont remplacés par le retardateur de flamme.

5. Utilisation selon l'une des revendications précédentes, le système adhésif étant appliqué sur le bord d'une zone marginale du film composite de construction.

6. Utilisation selon la revendication 5, **caractérisée en ce que**, sur au moins une zone de bord du film composite de construction, on prévoit une zone de retardateur de flamme avec un pourcentage de retardateur de flamme accru.

7. Utilisation selon la revendication 5 ou 6, **caractérisée en ce que** la zone de retardateur de flamme est appliquée sur au moins un bord longitudinal du film composite de construction et/ou sur la face supérieure et/ou inférieure sur la face extérieure du film composite de construction et/ou est extrudée dans la zone de bord du film composite de construction et/ou est reçue entre une couche supérieure et une couche inférieure du film composite de construction.

8. Utilisation selon l'une des revendications précédentes pour la réalisation d'une couche d'étanchéité avec une pluralité de films composites de construction.
